(19) Europäisches Patentamt
European Patent Office
Office européen des brevets

(11) Veröffentlichungsnummer: **0 119 468**
**B1**

(12) # EUROPÄISCHE PATENTSCHRIFT

(45) Veröffentlichungstag der Patentschrift: **04.02.87**

(21) Anmeldenummer: **84101553.0**

(22) Anmeldetag: **15.02.84**

(51) Int. Cl.⁴: **B 22 C 1/00**, B 22 C 1/20, B 22 C 1/22, C 08 L 33/00, C 04 B 26/04

(54) **Bindemittel für Giessereiformsande.**

(30) Priorität: **17.02.83 DE 3305361**
**24.01.84 DE 3402255**

(43) Veröffentlichungstag der Anmeldung:
**26.09.84 Patentblatt 84/39**

(45) Bekanntmachung des Hinweises auf die Patenterteilung:
**04.02.87 Patentblatt 87/6**

(84) Benannte Vertragsstaaten:
**BE CH DE FR GB IT LI SE**

(56) Entgegenhaltungen:
**EP-A-0 082 931**
**DE-A-2 453 879**
**DE-A-2 927 108**
**DE-B-1 032 896**
**SU-A-406 616**

**Chemical Abstracts Band 98, 28. Februar - 14. März 1983, Columbus, Ohio, USA, Seite 40, Spalte 1, Abstract Nr. 73330r**

(73) Patentinhaber: **Röhm GmbH, Kirschenallee Postfach 4242, D-6100 Darmstadt 1 (DE)**

(72) Erfinder: **Auer, Heinz- Jochen, Hanfgraben 13, D-6080 Gross- Gerau (DE)**
Erfinder: **Klesse, Wolfgang, Dr., Tucholskyweg 47, D-6500 Mainz 31 (DE)**
Erfinder: **Quis, Peter, Dr., Pfannmüllerweg 26, D-6100 Darmstadt (DE)**
Erfinder: **Szubinski, Walther W. Dr.- Ing., Eichbergstrasse 2, D-6100 Darmstadt (DE)**

**EP 0 119 468 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

### Gebiet der Erfindung

Die Erfindung betrifft die Verwendung polymerer Bindemittel auf Acrylatbasis zur Herstellung wärmeaushärtender Gießereiformsande. Aus Gießereisanden können bekanntlich unter Zusatz von Bindemitteln Kerne und Formen für den Metallguß hergestellt werden.

### Stand der Technik

Die Technik wendet polymere Bindemittel zur Herstellung von Gießformen und Formkernen für den Metallguß aus Gießereiformsanden an. Die Gießereiformsande werden in der Regel mit den Bindemitteln, meist Furanharzen oder Phenolharzen so formuliert, daß die Quarzsandkörper in zunächst warmem Zustand von einem dünnen Bindemittelfilm umhüllt werden. Anschließend werden die so hergestellten Sandformulierungen in einem geeigneten Metallwerkzeug (z. B. Kernkasten) bei Temperaturen zischen 150 und 300 °C innerhalb kurzer Zeit, beispielsweise ca. 60 - 180 Sekunden, ausgehärtet. Nach dem Entfernen sind die geformten Teile wie Formkern und Schale hart, stabil und technisch einsatzfähig.

Vorherrschend setzt man die polymeren Bindemittel in Form von Lösungen ein, und relativ selten hingegen als Dispersion bzw. Emulsion. Auch Acrylharze sind bereits als polymere Bindemittel vorgeschlagen worden. Aus der JP-OS 76 93725 (Chem. Abstr. 85, 196291 t) ist es z.B. bekannt, ein Emulsionspolymerisat auf Basis 60 Teile Methylmethacrylat 38 Teile Butylacrylat, 2 Teile Methacrylsäure und 100 Teilen Wasser mit 4 Teilen Wasserglas und 100 Teilen Sand zu einem Formsand zu verarbeiten. Der nicht-flüchtige Binderanteil soll 0,1 bis 5 Gew.-% des Sandes betragen.

Gemäß der JP-OS 76 93722 wird ein Emulsionspolymerisat (0,3 kg aus 52 Teilen Styrol, 44 Teilen Butylacrylat, 4 Teilen Methacrylsäure, 100 Teilen Wasser, Initiator und Emulgator) mit 10 kg Sand vermischt als Gießereiformsand empfohlen.

Der Zusatz von Alkylpolyacrylatbindern zu Sand und Zement geht aus der JP-OS 73 15771 (Chem.Abstr. 80, 184725) hervor. Beispielhaft wird die Verwendung von 100 g einer Polymethylacrylat-Emulsion auf 1000 g Sand bzw. 100 g Portlandzement angeführt.

Die Verwendung von gelösten Polymerisaten geht aus einer Reihe von Druckschriften hervor. Nach der JP-OS 76 93723 (Chem.Abstr. 86, 94030k) können 1 bis 10 Gew.-% eines Kunststoffpulvers zusammen mit 0,5 bis 30 Gew.-% eines niedrigsiedenden Lösungsmittels dem Sand beigemischt werden.

In der UdSSR-PS 406 616 (Chem.Abstr. 81, 53540) wird die Anwendung einer 10 bis 15 prozentigen wäßrigen Lösung eines Methacrylsäure-Dialkylmaleat-Copolymeren in Wasser als Bindemittel empfohlen.

Aus der DE-OS 10 32 896 ist die Verwendung von Polyacrylsäure oder von Copolymeren mit bis zu 50 % Styrol oder Vinylacetat in wäßriger Lösung als Binder für Gießereiformsande bekannt.

### Aufgabe

Der Verwendung von organischen Lösungsmitteln als Träger von polymeren Bindemitteln für Gießereisande stehen heute schwerwiegende Bedenken sowohl ökologischer als ökonomischer Natur entgegen.

Als Alternative wurde die Verwendung von polymeren Bindemittellösungen in Wasser vorgeschlagen. Durch die Bedingung der Wasserlöslichkeit ist die Monomerenauswahl nach Qualität und Quantität von vornherein ziemlich begrenzt. Polymerlösungen besitzen unvermeidbar eine relativ hohe Viskosität. Um sie in die Sande einwandfrei einarbeiten zu können, muß eine annehmbare Viskosität hergestellt, d.h. in entsprechendem Maße verdünnt werden.

Zwar ist auch die Verwendung vcn Emulsionspolymerisaten bereits vorgeschlagen worden; die dabei in Erwägung gezogenen Polymertypen konnten jedoch hinsichtlich ihrer Binder-Eigenschaften nicht befriedigen.

Bezüglich der heute im Vordergrund stehenden Anforderungen an polymere Bindemittel für wärmeaushärtende Gießereiformsande seien folgende Stichworte angegeben:

1 - hohe Dimensionsgenauigkeit der Formen bzw. Kerne,
2 - gute Beständigkeit gegen Erosion durch geschmolzenes Metall,
3 - möglichst glatte und geschlossene Oberfläche von Formen und Kernen,
4 - Härte und Manipulierbarkeit nach der Entnahme, z.B. im noch warmen Zustand,
5 - minimaler Nachreinigungsaufwand für die Gußstücke,
6 - gute Entfernbarkeit des Kernsandes nach dem Guß,
7 - Wiederverwendbarkeit des Sandes,
8 - hohe Härtungsgeschwindigkeiten, Durchhärtung,
9 - Anwendbarkeit bei automatisierter Produktion,
10 - minimale Entwicklung schädlicher Gase

letzteres im vorliegenden Zusammenhang von ganz besonderer Bedeutung.

**Lösung**

Es wurde gefunden, daß eine besonders geeignete Lösung der dargestellten Aufgabe die Verwendung von Bindemitteln auf Kunststoffbasis mit einem Gehalt an Carboxylgruppen darstellt. Die Bindemittel stellen eine wäßrige Dispersion eines Copolymerisats P aufgebaut aus

A) mindestens einer ungesättigten Carbonsäure der Formel I

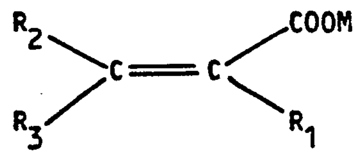

I

worin $R_1$, $R_2$ und $R_3$ für Wasserstoff, einen Alkylrest mit 1 bis 6 Kohlenstoffatomen oder einen Rest $-(CH_2)_n$ -COOM, steht, wobei M ein Proton oder ein Alkali- oder Erdalkalikation und n null oder eins bedeutet mit der Maßgabe, daß die ungesättigten Carbonsäuren der Formel I nicht mehr als zwei Reste -COOM im Molekül besitzen, in Anteilen von mindestens 20 und höchstens 90 Gew.-%, bezogen auf die Gesamtheit des Copolymerisat P, und

B) aus weiteren mit A) copolymerisierenden Monomeren in Anteilen von 10 bis 80 Gew.-%, bezogen auf P mit der Maßgabe, daß der Anteil der Reste -COOM, worin M für ein Alkali- oder Erdalkalikation steht, an der Gesamtheit der Reste -COOM im Copolymerisat P 20 % nicht überschreiten soll,

als Monomeren dar.

Unter "Sand" im Sinne der vorliegenden Erfindung sei die übliche feuerfeste, körnige Grundsubstanz verstanden, die aus gewaschenem klassiertem Quarzsand, in bestimmten Fällen auch aus Chromit-, Zirkon- oder Olivinsand, besteht. Daneben finden auch Schamotte-, Magnesit-, Sillimanit- oder Korundmaterialien Verwendung. Der Korndurchmesser liegt im allgemeinen im Bereich zwischen 0,1 und 0,5 mm.

**Das Copolymerisat P**

Das Copolymerisat P liegt definitionsgemäß in wäßriger Dispersion vor d.h. seine Zusammensetzung ist in jedem Fall auf die Dispergierbarkeit in wäßriger Phase abgestimmt. Vorzugsweise weist das Copolymerisat P eine minimale Filmbildungstemperatur (MFT) nach DIN 53787 von kleiner 100 °C auf. Weiter kommt ihm vorzugsweise eine dynamische Einfriertemperatur ($T\lambda_{max}$) nach DIN 53445/DIN 7724 von größer 150 °C zu.

Innerhalb bestimmter Voraussetzungen läßt sich die Wärmeformbeständigkeit bzw. die dynamische Einfriertemperatur ($T\lambda_{max}$) der Copolymerisate P durch Auswahl der Monomeren und ihrer Anteile in vorhersehbarer Weise steuern. (Vgl. Vieweg-Esser, Kunststoff-Handbuch, Bd. IX, Polymethacrylate, S. 333-340, C. Hanser-Verlag 1975).

Erfindungserheblich ist der relativ hohe Gehalt der Polymerisate P an Carboxylgruppen -COOM (M = H), bzw. Carboxylatgruppen (M = Ammonium-, Alkali- oder Erdalkalikation, im letzteren Falle kombiniert mit einem weiteren Anion), der dadurch zum Ausdruck kommt, daß der Anteil der den COOM-Rest tragenden Monomeren der Formel I 20 Gew.-%, bezogen auf die Gesamtheit der Monomeren des Polymerisats P, nicht unterschreitet und bis 90 Gew.-% betragen kann. Der Anteil der Carboxylatgruppen mit Ammonium-, Alkali- oder Erdalkalikationen soll höchstens 20 % der im Copolymerisat P vorhandenen Reste -COOM ausmachen.

Vorzugsweise erstreckt sich die Bedeutung der Reste $R_1$, $R_2$ und $R_3$ in Formel I (wenn sie keine Reste -COOM darstellen oder enthalten) auf Wasserstoff oder Methyl.

Als Monomere vom Typ der ungesättigten Carbonsäuren der Formel I seren die Maleinsäure, die Fumarsäure, die Itaconsäure, insbesondere aber die Acryl- und die Methacrylsäure besonders genannt. Vorteilhaft können auch verschiedene Vertreter des Typs A) im Copolymerisat vorhanden sein. Die Bestandteile B) der Copolymerisate P sind definitionsgemäß mit A) copolymerisierende, d.h. radikalisch polymerisierbare Monomere. Sie können beispielsweise durch die Formel II

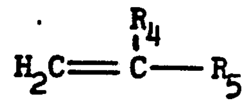

II

worin $R_4$ für Wasserstoff oder Methyl und $R_5$ für einen Rest $-COOR_6$, $-CONR_7R_8$, gegebenenfalls alkylsubstituiertes Phenyl, $-(CH_2)_m-O-R_9$, $-CH=CH_2$, oder einen inerten heterocyclischen Rest steht, wobei $R_6$ für einen Alkylrest mit 1 bis 18 Kohlenstoffatomen, $R_7$ und $R_8$ unabhängig voneinander für Wasserstoff oder einen Alkylrest mit 1 bis 18 Kohlenstoffatomen, $R_9$ für einen Alkylrest mit 1 bis 6 Kohlenstoffatomen oder einen Rest

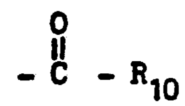

worin $R_{10}$ für einen Alkylrest mit 1 bis 5 Kohlenstoffatomen steht, dargestellt werden. *

Unter die Komponente B) des Copolymeren P können gemäß einer bevorzugten Ausführungsart der Erfindung auch Monomere fallen, die bei einer Temperatur oberhalb 60 °C zu nicht-radikalischen Vernetzungsreaktionen befähigt sind. Diese (an sich radikalisch polymerisierenden) Moncmeren enthalten im allgemeinen eine funktionelle Gruppe, die zu einer Vernetzungsreaktion mit funktionellen Gruppen anderer Monomerer oder mit einem multifunktionellen (d.h. mindestens bifunktionellen) Vernetzungsreagenz, das selbst nicht radikalisch polymerisiert, bei einer Temperatur oberhalb 60 °C befähigt.

Die Temperaturschwelle von 60 °C ist angezeigt, um eine vorzeitige Vernetzung zu vermeiden. Es versteht sich, daß die Vernetzungsreaktion in dem Temperaturbereich oberhalb 60 °C eintreten soll, in dem die schließliche Formgebung stattfindet, beispielsweise im Bereich oberhalb 100 °C und bis 300 °C. Die nicht-radikalisch vernetzenden Monomeren stellen vorzugsweise 0,3 bis 30 Gew.-%, insbesondere 0,5 bis 20 Gew.-%, des Copolymerisats P dar.

* Unter "alkylsubstituiert" sei vorzugsweise substitution mit einem $C_1$-$C_3$-alkylrest verstanden.

Die Bestandteile B) der Copolymerisate P fallen somit in die Gruppe

a) der Acryl- und Methacrylsäureester mit $C_1$ - $C_{18}$-Alkoholen, insbesondere mit $C_1$ - $C_8$-Alkoholen.

Besonders genannt seien das Methylmethacrylat, das Methylacrylat, Ethylacrylat, das Ethylmethacrylat, das Butylacrylat und das Eutylmethacrylat, das Ethylhexylacrylat,

b) der Acryl- und Methacrylsäureamide und die am Stickstoff mit $C_1$ - $C_8$-alkylsubstituierten Amide.

Genannt seien das Methacrylamid und besonders das Acrylamid,

c) Monomere, die bei einer Temperatur oberhalb 60 °C zu nichtradikalischen Vernetzungsreaktionen befähigt sind, abgesehen von a) und b).

Vorzugsweise stellen diese Monomere Derivate der Acryl- oder der Methacrylsäure dar,

d) Styrol und alkylierte Styrole, beispielsweise α-Methylstyrol sowie die kernalkylierten Styrole wie p-Methylstyrol,

e) Vinyläther und Vinylester, insbesondere der Methyl- bis Hexylvinyläther sowie Vinylacetat, Vinylpropionat, Vinylbutyrat,

f) heterocyclische Vinylverbindungen wie Vinylpyridin, Vinylpyrrolidon, Vinylimidazol, Vinylcarbazol, insbesondere die N-Vinylverbindungen,

g) Butadien.

Die Zusammensetzung der Komponente B) ist offenbar (soweit sie den getroffenen Definitionen und Merkmalen entpricht) nicht besonders kritisch, sieht man von den nicht-radikalisch vernetzenden Monomeren ab.

Mit Vorteil setzt sich die Komponente B) aus mehreren Monomeren zusammen.

Besonders bevorzugt sind die Derivate der Acryl- und der Methacrylsäure, insbesondere die Ester und die Amide.

An erster Stelle seien das Methylmethacrylat und das Ethylacrylat genannt.

Bei einer besonders bevorzugten Ausführungsart besteht daher das Copolymerisat P aus

A') der Acryl- und/oder der Methacrylsäure in Anteilen von 20 bis 90 Gew.-% und

B') aus Acryl- und/oder Methacrylsäureestern a) oder Acrylund/oder Methacrylamiden b) bzw. beiden, gegebenenfalls zusammen mit heterocyclischen Vinylverbindungen e). Dabei machen die Monomeren a) vorzugsweise mehr als 70 Gew.-% der Komponente B) aus. Besonders bevorzugt ist die Ausführungsart, bei der die Komponenten A') und B') etwa im Verhältnis 1: 1 stehen.

Von besonderem Interesse ist ferner die Copolymerisation von Monomeren des Typs c). Diese Monomeren enthalten in der Regel eine funktionelle Gruppe, die nichtradikalisch unter Reaktion mit einer anderen funktionellen Gruppe oder durch Reaktion mit einem multifunktionellen, nichtradikalischen Vernetzungsreagenz bei Temperaturen oberhalb 60° C Vernetzung bewirkt.

Derartige Monomere und Vernetzungsreagentien sind an sich bekannt. Funktionelle Gruppen, welche die genannten Bedingungen erfüllen, sind z.B. die Hydroxy-, Epoxy-, N-Methylolamidound davon abgeleitete Ether, und sogenannte maskierte oder geblockte Isocyanatgruppen neben den Carboxy-, Amid- und Esterfunktionen, die obligatorisch bzw. als weitere Bestandteile der Monomerengruppe B) vorhanden sind.

Die Vernetzung tritt bei diesem Typ von Vernetzern im allgemeinen infolge einer Kondensationsreaktion (z.B. durch Eliminierung von Wasser, Amin, Alkohol oder Formaldehyd) oder mittels einer Additionsreaktion (z.B. durch nucleophilen Angriff auf eine Epoxid- oder maskierte Isocyanat-Funktion) ein.

Besonders geeignet sind vernetzende Monomere der Gruppe c), die z.B. der Formel III entsprechen

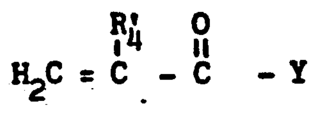

III

worin $R'_4$ für Wasserstoff oder Methyl, Y für eine Gruppe

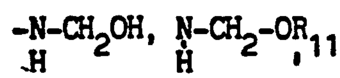

oder eine Gruppe Q-B-Z steht, wobei Q Sauerstoff oder $-NH_{12}$, B eine gegebenenfalls verzweigte Kohlenwasserstoffkette oder einen Ring mit 1 bis 8 Kohlenstoffatomen, Z eine Hydroxygruppe oder eine Gruppe

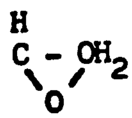

oder eine Gruppe $NHR_{13}$ und $R_{11}$ und $R_{13}$ einen Alkylrest mit 1 bis 8 Kohlenstoffatomen, $R_{12}$ Wasserstoff oder einen Alkylrest mit 1 bis 8 Kohlenstoffatomen bedeuten.

Genannt seien insbesondere N-Methylolacrylamid und -methacrylamid, die davon abgeleiteten Ether, Hydroxylalkylmethacrylsäureester und -acrylestern sowie die Hydroxyalkylamide der Acryl- und der Methacrylsäure, insbesondere die Hydroxyethyl- und die Hydroxypropylverbindungen.

Voraussetzung für das Eintreten einer effektiven Vernetzung ist im vorliegenden Fall die Gegenwart von mindestens zwei Partnern innerhalb verschiedener Copolymerketten, die mittels Kondensations- oder Additionsreaktion im Temperaturbereich ab 60 °C und bis ca. 200 °C reagieren.

Zusätzlich zu den genannten Partnern kann ferner die Anwesenheit eines multifunktionellen Vernetzungsreagenzes erforderlich sein, das selbst nicht radikalisch polymerisiert werden kann und das mit den genannten Partnern oberhalb 60 °C reagiert.

Derartige multifunktionelle, nicht-radikalische Vernetzungsreagentien sind an sich bekannt. Sie sollen mindestens zwei funktionelle Gruppen, z.B. Hydroxy-, Epoxy- oder blockierte Isocyanat-Gruppen enthalten, die an einer abstandhaltenden Einheit, gewöhnlich einer Kohlenwasserstoffkette fixiert sind. Die Kohlenwasserstoffkette kann von 2 bis 10, vorzugsweise von 2 bis 20 Kohlenstoffatome enthalten mit einem Minimum von 2 funktionellen Gruppen und einem Maximum an funktionellen Gruppen, das der Zahl der Kohlenstoffatome in der Kette entspricht. Ein Bruchteil der $-CH_2$-Einheiten der Kohlenstoffkette kann durch andere, unter den Reaktionsbedingungen inerte Gruppen ersetzt sein, beispielsweise durch Etherbrücken. Im allgemeinen sind die Partnermoleküle, die eine solche nicht-radikalische Vernetzung eingehen können, im molaren Verhältnis 20: 1 bis 1: 1 vorhanden.

Multifunktionelle, nicht-radikalische Vernetzungsreagentien mit mindestens zwei Isocyanatgruppen im Molekül kommen zweckmäßig in Form von "blockierten" oder "Maskierten" Isocyanatverbindungen zur Anwendung. Derartige Blockierungen schließen z.B. die Reaktion der mehrfach isocyanatsubstituierten Verbindungen (Diisocyanate) mit Polyolen ein. Genannt sei z.B. das Reaktionsprodukt des 2,4- oder 2,6-Toluylendiisocyanats mit Polyolen, z.B. der Verbindung $CH_3CH_2C(CH_2OH)_3$, welches mit Phenol zum Phenylurethan reagiert. Solche "Blockierte Isocyanate" sind in Handel, beispielsweise unter der Bezeichnung DESMODUR AP® der Bayer AG.

Als Polyexoxy-Verbindungen, die sich zur Anwendung bei der Vernetzung der Polymeren eignen, seien die aus der Reaktion von Bisphenol A mit Epichlorhydrin hervorgegangen genannt, beispielsweise das Produkt EPIKOTE 1001 ® der Shell Chemie mit einem MW von 900.

Wie bereits erwähnt, umfassen die zur Vernetzung führenden Kondensations- oder Additionsreaktionen Umsetzungen zwischen beispielsweise den folgenden funktionellen Gruppen:

| Am Monomer | an dem multifunktionellen, nicht-radikalischen Vernetzungsreagenz |
|---|---|
| i) $-COOR$<br>$R = Alkyl$ | vi) $HO-CH_2-NH-\overset{O}{\overset{\parallel}{C}}-$ |
| ii) $-COOH$ | vii) $HO-CH_2-$ |
| iii) $-CH_2OH$ | viii) 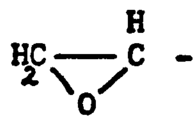 |
| iv) $-\overset{O}{\overset{\parallel}{C}}-NH\,CH_2OH$ | |
| v) $-\overset{O}{\overset{\parallel}{C}}-NH_2$ | ix) blockiertes Isocyanat |

Die hauptsächlichen Reaktionsweisen dürften dabei die folgenden Umsetzungen umfassen:
i) mit iii), iv), vi), vii), oder viii)
ii) mit iii), iv), vi), viii) oder ix)
iv) mit vi), vii), viii) oder ix)
v) mit v)

Ebenfalls bevorzugt ist eine Ausführungsart, bei der die Komponente B) ganz oder teilweise aus Styrol und/oder dessen Derivaten gemäß d) besteht.

Im allgemeinen liegen die Molgewichte der erfindungsgemäß zu verwendenden Copolymerisate P im Bereich $5 \times 10^4$ bis $1 \times 10^6$, insbesondere im Bereich $2 \times 10^5$ bis $5 \times 10^5$.

Bei einer weiteren vorteilhaften Ausgestaltung der Erfindung kann das Bindemittel in der wäßrigen Dispersion neben dem Copolymerisat P noch in Anteilen von 1 bis 10 Gew.-% (bezogen auf das Copolymerisat P ein radikalisch vernetzendes Monomeres V) mit einem Siedepunkt $\geqslant 150$ °C zusammen mit einem, im vernetzenden Monomeren löslichen Initiator mit einem Zerfallspunkt oberhalb 100 °C in Mengen von 0,1 bis 5 Gew.-%, bezogen auf das Monomere M, enthalten. Solche radikalisch vernetzenden Monomeren sind bekanntlich Verbindungen mit mehr als einer radikalisch polymerisierenden Doppelbindung im Molekül, beispielsweise die Acryl- bzw. Methacrylester von Polyolen.

**Herstellung der Dispersionen**

Die Herstellung der wäßrigen Dispersionen der Copolymerisate P kann in an sich bekannter Weise durch Emulsionspolymerisation vorgenommen werden. Es kann dabei nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und

nichtionische Tenside verwendbar. Im allgemeinen wird die verwendete Emulgatormengebezogen auf das Polymerisat - 3 Gew.-% nicht überschreiten.

Als Initiator können neben den in der Emulsionspolymerisation üblichen Verbindung, wie z.B. Perverbindungen wie Wasserstoffperoxid, Ammoniumperoxidisulfat (APS) auch Redoxsysteme wie Bisulfit-APS-Eisen sowie Azo-Starter verwendet werden. Die Initiatormenge liegt im allgemeinen bei 0,005 bis 0,5 Gew.-%, bezogen auf das Polymerisat. (Vgl. H. Rauch-Puntigam, T. Völker "Acryl- und Methacrylverbindungen", Springer-Verlag, 1967, S. 217-229).

Die Polymerisationstemperatur richtet sich innerhalb gewisser Grenzen nach den Initiatoren. So arbeitet man bei Anwendung von APS vorteilhaft im Bereich von 60 - 90 °C. Bei Einsatz von Redoxsystemen kann auch bei tieferen Temperaturen, beispielsweise bei 30 °C polymerisiert werden. Neben der Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation mit Hilfe von Redox-Initiatoren gestartet. Das Monomer-Wasser-Verhältnis muß dabei der freiwerdenden Reaktionswärme angepaßt werden. In der Regel treten keine Schwierigkeiten auf, wenn man eine 50 %ige Emulsion so erzeugt, daß man zunächst die Hälfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Hälfte der Monomeren zusammen mit den Hilfsstoffen zusetzt. Der Teilchendurchmesser der erfindungsgemäß verwendeten Emulsionen liegt in der Regel bei 0,05 bis 5 µm, bevorzugt bei 0,1 bis 1 µm.

**Herstellung der gebrauchsfähigen, bindemittelhaltigen Gießereiformsande**

Die üblicherweise als Formsande verwendeten Materialien können in bekannter Weise mit den wäßrigen Dispersionen der Copolymerisate P gemischt werden, wobei die zur Einstellung des gewünschten Polymergehalts benötigten Mengen zur Anwendung kommen. Gegebenenfalls findet zu diesem Zeitpunkt auch die Zumischung der multifunktionellen, nichtradikalischen Vernetzungsreagentien statt. Als Mischaggregate eignen sich z. B. Zwangsmischer. Man erhält in der Regel in dieser einfachen Weise genügend rieselfähige Gießereiformsande.

**Vorteilhafte Eigenschaften**

Die erfindungsgemäßen Bindemittel für wärmeaushärtende Gießereiformsande erfüllen die Anforderungen der Technik (s. oben) in einem überraschend hohen Maße. Ihre Verwendung stellt eine in ökologischer und ökonomischer Hinsicht besonders günstige Lösung dar.

Hervorzuheben sind hohe Dimensionsgenauigkeit der daraus hergestellten Formen und Kerne, gute Erosionsbeständigkeit, Härte und Manipulierbarkeit der Kerne nach der Entnahme, d. h. noch in warmem Zustand ungewöhnlich glatte und geschlossene Oberfläche und entsprechend perfekte Gußstücke, kein Nachreinigungsaufwand, Wiederverwendbarkeit der Formsande.

Als besonders überraschend hervorzuheben ist die minimale Entwicklung schädlicher Gase, ja die minimale Gasentwicklung überhaupt, die bei Anwendung der Formsande beobachtet wird.

Die folgenden Beispiele dienen zur Erläuterung der Erfindung. Die minimale Filmbildungstemperatur wird dabei nach DIN 53 787, die dynamische Einfriertemperatur $T_{dmax}$ nach DIN 53 445/DIN 7724 bestimmt.

**Herstellung von Dispersionen der Copolymerisate P**

**Beispiel 1**

In einem mit Rückflußkühler, Rührwerk und Zulaufgefäß versehenen Wittschen Topf (2,1) werden bei 80 °C 14 g Ammoniumperoxydisulfat und 0,35 g Natriumdodecylsulfat in 1440 g dest. Wasser gelöst. In diese Lösung wird unter Rühren bei 80 °C innerhalb von 4 Stunden eine zuvor aus

180 g Ethylacrylat
120 g Methylmethacrylat
300 g Methacrylsäure
1,2 g 2-Ethylhexylthioglycolat und
14 g Polyoxyethylen-Sorbitan-Monooleat

hergestellte Monomeren-Emulgatorenmischung zugetropft und anschließend 2 Std. bei 80 °C gehalten. Nach Abkühlen auf Raumtemperatur Filtration über ein feinmaschiges Siebgewebe aus rostfreiem Stahl.

Das Copolymerisat enthält 50 Gew.-% Methacrylsäure, 30 Gew.-% Ethylacrylat und 20 Gew.-% Methylmethacrylat, besitzt ein Molekulargewicht von ca. 200 000, eine minimale Filmbildungstemperatur von 58 °C und eine $T_{\lambda max}$ von 157 °C.

**Beispiel 2**

Des Verfahren entspricht dem des Beispiels 1, außer daß die vorab hergestellte Monomer/Emulgator-Mischung wie folgt zusammengesetzt war:

180 g Ethylacrylat
102 g Methylmethacrylat
18 g Methacrylamid
300 g Methacrylsäure
1,2 g 2-Ethylhexylthioglycolat und
14 g Polyoxyethylen-Sorbitan-Monooleat

Die entstandene niedrigviskose Dispersion hat einen Trockengehalt von 30 %. Molekulargewicht des Copolymerisats ca. 200 000, minimale Filmbildungstemperatur = 54 °C, $T_{\lambda max}$ = 156 °C.

**Beispiel 3**

Das Verfahren entspricht dem des Beispiels 1, außer daß die Monomer/Emulgator-Mischung wie folgt zusammengesetzt war:

300 g Methacrylsäure
180 g Ethylacrylat
90 g Methylmethacrylat
30 g N-Vinylpyrrolidon
1,2 g 2-Ethylhexylthioglycolat und
14 g Polyoxyethylen-Sorbitan-Monooleat

Die gebildete, niedrigviskose Dispersion hat einen Trockengehalt von 30,5 %. Das Copolymerisat besitzt ein Molekulargewicht von ca. 200 000, eine minimale Filmbildungstemperatur von 42 °C und eine $T_{\lambda max}$ von 151 °C.

**Beispiel 4**

Zur Anwendung kommt das Verfahren gemäß Beispiel 1 mit den folgenden Änderungen: Die Vorlage enthält 2,8 g Ammonpersulfat (anstatt 1,4 g). Die zugetropfte Monomer/Emulgator-Mischung war wie folgt zusammengesetzt:

300 g Methacrylsäure
180 g Ethylacrylat
120 g Styrol
1,2 g Ethylhexylthioglycolat und
14 g Polyoxyethylen-Sorbitan-Monooleat

Die niedrigviskose Dispersion hat einen Trockengehalt von 29,5 %. Das Copolymer besitzt ein Molekulargewicht von ca. 150 000, eine minimale Filmbildungstemperatur von 53 °C und eine $T_{\lambda max}$ von 151 °C.

**Beispiel 5**

Zunächst wird das Verfahren gemäß Beispiel 1 angewendet, außer daß die Monomer/Emulgator-Mischung die folgende Zusammensetzung hat:

300 g Methacrylsäure
120 g Methylmethacrylat
180 g Ethylacrylat
1,2 g 2-Ethylhexylthioglycolat und
14 g Polyoxyethylen-Sorbitan-Monooleat

Nach beendeter Polymerisation wird die Reaktionsmischung auf Raumtemperatur abgekühlt. Anschließend werden 12,3 g einer 25 %igen wäßrigen Ammoniaklösung zugesetzt. Die weitere Aufarbeitung erfolgte wie in Beispiel 1.

Das so erhaltene Copolymer hatte eine minimale Filmbildungstemperatur von 52 °C und eine $T_{\lambda max}$ von 154° C.

**Beispiel 6**

In einem mit Rückflußkühler, Rührwerk und Zulaufgefäß versehenen Witt'schen Topf (2 l) werden bei 80 °C 1,4 g Ammoniumperoxydisulfat und 0,2 g des Natriumsalzes eines siebenfach oxethylierten und sulfatierten Triisobutylphenols in 580 g destilliertem Wasser gelöst. In diese Lösung wird unter Rühren bei 80 °C innerhalb von 4 Stunden eine Emulsion aus
258 g Methacrylsäure
42 g Itaconsäure
180 g Ethylacrylat
120 g Methylmethacrylat
9 g des Emulgators (s. oben)
860 g destilliertes Wasser
zugetropft. Anschließend hält man noch 2 Stunden bei 80 °C. Nach dem Abkühlen auf Raumtemperatur filtriert man über ein feinmaschiges Siebgewebe aus rostfreiem Stahl. Man erhält eine niedrigviskose Dispersion mit einem Trockengehalt von 29,7 %. Das Copolymere hatte ein Molgewicht von ca. 200 000, eine minimale Filmbildungstemperatur von 58 °C und eine $T_{\lambda max}$ von 158 °C.

**Beispiel 7**

Das Verfahren entspricht dem des Beispiels 1, außer daß die vorher hergestellte Monomer/Emulgator-Mischung wie folgt zusammengesetzt war:
120 g Methacrylsäure
120 g Acrylsäure
360 g Methylmethacrylat
1,2 g 2-Ethylhexylthioglycolat
14 g Polyoxyethylen-Sorbitan-Monooleat
Die niedrigviskose Dispersion hatte einen Trockengehalt von ca. 29,9 %. Das Copolymere hatte ein Molgewicht von ca. 250 000, eine minimale Filmbildungstemperatur von 50 °C und eine $T_{\lambda max}$ von 157 °C.
Anstelle des Ethylacrylats in den Beispielen 1 - 6 kann mit vergleichbar gutem Ergebnis ein Vinylether oder ein Vinylester wie z.B. Vinylacetat oder es kann Butadien in solchen Mengen eingesetzt werden, daß das resultierende Copolymere einen $T_d$ -Wert von > 140 °C besitzt. Gewöhnlich liegen die angewendeten Mengen an Vinylverbindungen oder Butadien unter 30 Gew.-%, bezogen auf das Copolymere P.

**Beispiel 8**

In einem 2 1-Witt'schen Topf, augestattet wie in Beispiel 1 werden bei 80 °C 4,2 g Ammoniumperoxydisulfat und 1,05 g Natriumlaurylsulfat in 4 300 g destilliertem Wasser gelöst. In diese Lösung wird unter Rühren bei 80° C innerhalb 4 Stunden eine zuvor aus
900 g Methacrylsäure
360 g Ethylacrylat
180 g Hydroxyethylacrylat
42 g Polyoxyethylen-Sorbitan-Monooleat und
3,6 g 2-Ethylhexylthioglycolat
hergestellte Monomeren-Emulgatormischung zugetropft und anschließend 2 Std. bei 80 °C gehalten. Nach dem Abkühlen auf Raumtemperatur wurde über ein feinmaschiges Siebgewebe aus rostfreiem Stahl filtriert.
Die niedrigviskose Dispersion hat einen Trockengehalt von 30 %. Das Copolymerisat hat ein Molekulargewicht von ca. 250 000, eine minimale Filmbildungstemperatur von 50 °C und eine $T_{\lambda max}$ von 146 °C.

**Beispiel 9**

Durchführung wie in Beispiel 8, mit 4,2 g Ammoniumperoxydisulfat und 1,05 g Natriumlaurylsulfat in 4 250 g destilliertem Waser in der Vorlage. Analog Beispiel 8 wird dazu die folgende Monomer/Emulgatorermischung zugetropft:
900 g Methacrylsäure
504 g Ethylacrylat
306 g Methylmethacrylat
90 g N-Methylolmethacrylamid
3,6 g 2-Ethylhexylthioglycolat
42 g Polyoxyethylen-Sorbitan-Monooleat

60 g destilliertes Wasser
und wie in Beispiel 8 verfahren.
Die resultierende niedrigviskose Dispersion hat einen Trockengehalt von 30 %. Das Copolymerisat hat ein Molgewicht von ca. 270 000, eine minimale Filmbildungstemperatur von 57 °C, eine $T_{\lambda max}$ von 150 °C.

**Beispiel 10**

Durchführung wie in Beispiel 9, außer daß anstelle von N-Methylolmethacrylamid 90 g N-Butoxymethylmethacrylamid eingesetzt werden. Die physikalischen Daten des Copolymerisats sind dem des Produkts nach Beispiel 9 sehr ähnlich. Analog den vorstehenden Beispielen lassen sich auch Copolymerisate aus den übrigen Monomeren der Gruppe B) herstellen.

**Herstellung des gebrauchsfertigen Formsandgemisches**

**Beispiel 11**

Bei Raumtemperatur werden in einem Zwangsmischer 97 kg Gießereiform-Quarzsand mit 3 Gew.-T. einer wäßrigen Acrylharzdispersion, enthaltend 30 % des Copolymerisats P nach Beispiel 1 (Methacrylsäure 50 Gew.-%, Ethylacrylat 30 Gew.-%, Methylmethacrylat 20 Gew.-% MG ca. 200 000) gemischt. Es wird auf diese Weise ein gebrauchsfertiges; genügend rieselfähiges Gießerei-Formsandgemisch erhalten.

**Herstellung eines gebrauchsfertiges Formsandgemisches unter Verwendung eines multifunktionellen, nicht-radikalischen Vernetzungsreagenzes**

**Beispiel 12**

3 kg trockener Gießereiform-Quarzsand werden bei Raumtemperatur mit 3 g (0,1 Gew.-%) eines feingepulverten (durchschnittliche Teilchengröße 20 µm) festen Epoxyd-Harzes in einem Zwangsmischer innig gemischt (= Festes Bisphenol A - Epichlorhydrin Harz mit einem Epoxy-Äquivalentgewicht von 450 - 500 g Viskosität bei 25 °C 1 2 - 1 7 Poise Erweichungstemperatur 50 - 70 °C; Handelsprodukt EPIKOTE 106 ® der Shell Chemie) Anschließend werden 90 g einer wäßrigen Dispersion des Copolymerisats nach Beispiel 1 oder nach Beispiel 8 homogen untergemischt.
Anstelle des Epoxid-Harzes kann z.B. auch die gleiche Menge eines geblockten, festen Isocyanats in feinverteilter Form (z.B. Produkt DESMODUR AP® der Bayer AG, s.oben) eingesetzt werden.

**Herstellung eines Gießereiformkörpers (hier Gießereikern)**

**Beispiel 13**

In eine Eisenform, die eine Temperatur von 150 - 200 °C aufweist, wird das Formsandgemisch gemäß Beispiel 11 oder 12 mittels Druckluft "eingeschlossen". Die gefüllte Form wird etwa 0,5 bis 3 Minuten auf oben genannte Temperatur gehalten. Danach wird die Form heiß geöffnet und der Gießereikern entnommen. Er ist vollkommen stabil, formtreu und manipulierbar.

**Herstellung eines Gußstückes aus Metall**

**Beispiel 14**

In eine Kastenform für den Eisenguß wird der Formkern gemäß Beispiel 13 eingebracht und fixiert. Der Guß wird in Eisen ausgeführt. Nach Erkalten resultiert ein Metallgußstück mit einem Hohlraum mit den Maßen des Kernes gemäß Beispiel 13. Der Kern ist vollkommen zerfallen. Es trat beim Kontakt mit dem flüssigen Eisen keine Gasbildung auf. Das Gußteil war praktisch porenfrei.

**Beispiel 15**

In eine Acrylharzdispersion gemäß Beispiel 1 wurden 5 % (bezogen auf Gesamtdispersion) folgender Monomeren-Initiator-Mischung: Trimethylolpropantrimethacrylat/tert.-Butylperbenzoat oder ersatzweise ein peroxidfreier Initiator (z.B. Akzo-Starter 407 der Fa. Akzo) in Mengen bis zu 20 % bezogen auf Trimethylolpropantrimethacrylat, eingerührt. Diese Mischung wurde in gleicher Korzentration wie in den Beispielen 11-14 weiterverarbeitet. Es resultierten auch hier harte und manipulierbare Formkörper, die keine Tendenz zur Gasbildung zeigten.

**Patentansprüche**

1. Verwendung von Bindemitteln auf Kunststoffbasis mit einem Gehalt an Carboxylgruppen zur Herstellung wärmeaushärtenden Gießereiformsande,
dadurch gekennzeichnet,
daß die Bindemittel eine wäßrige Dispersion eines Copolymerisats P aufgebaut aus
A) mindestens einer ungesättigten Carbonsäure der Formel I

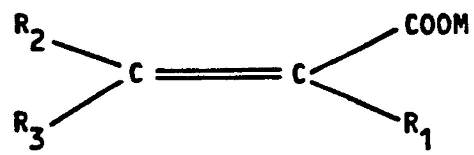

I

worin $R_1$, $R_2$ und $R_3$ für Wasserstoff, einen Alkylrest mit 1 bis 6 Kohlenstoffatomen oder einen Rest $-(CH_2)_n$ -COOM, stehen, wobei M ein Proton oder ein Ammonium-, Alkali- oder Erdalkalikation und n null oder eins bedeuten mit der Maßgabe, daß die ungesättigten Carbonsäuren der Formel I nicht mehr als zwei Reste -COOM im Molekül besitzen, in Anteilen von mindestens 20 und höchstens 90 Gew.-%, bezogen auf die Gesamtheit des Copolymerisats P, und
B) aus mit A) copolymerisierenden Monomeren in Anteilen von 10 bis 80 Gew.-%, bezogen auf P mit der Maßgabe, daß der Anteil der Reste -COOM, worin M für ein Ammonium-, Alkali- oder Erdalkalikation steht, an der Gesamtheit der Reste -COOM im Copolymerisat P 20 % nicht überschreiten soll,
als Monomeren darstellen.

2. Verwendung von Bindemitteln gemäß Anspruch 1, dadurch gekennzeichnet, daß die Gruppe der copolymerisierenden Monomeren B) Monomere umfaßt, die zu nicht-rakikalischen Vernetzungsreaktionen bei einer Temperatur oberhalb 60° C befähigt sind.

3. Verwendung von Bindemitteln gemäß den Ansprüchen 1 und 2, dadurch gekennzeichnet, daß die Gruppe der copolymerisierenden Monomeren B) Monomere umfaßt, die eine funktionelle Gruppe enthalten, welche nicht-radikalisch unter Reaktion mit einer anderen Funktionellen Gruppe oder durch Reaktion mit einem multifunktionellen, nichtradikalischen Vernetzungsreagenz bei Temperaturen oberhalb 60°C Vernetzung bewirken.

4. Verwendung von Bindemitteln gemäß Anspruch 3, dadurch gekennzeichnet, daß die funktionellen Gruppen, welche nicht-radikalisch unter Reaktion mit anderen funktionellen Gruppen oder durch Reaktion mit einem multifunktionellen, nicht-radikalischem Vernetzungsreagenz bei Temperaturen oberhalb 60 °C Vernetzung bewirken, Amido-, N-Methylolamido-, Hydroxy-, Epoxy- oder blockierte Isocyanatogruppen sind.

5. Verwendung von Bindemitteln gemäß den Ansprüchen 2, 3, und 4, dadurch gekennzeichnet, daß die Monomeren, die bei einer Temperatur oberhalb 60°C zu nicht-radikalischen Vernetzungsreaktionen befähigt sind, 0,3 bis 30 Gew.-% des Copolymerisats P ausmachen.

6. Verwendung von Bindemitteln gemäß den Ansprüchen 2 bis 5, dadurch gekennzeichnet, daß die zu nicht-radikalischen Vernetzungsreaktionen oberhalb 60°C befähigten Monomeren Derivate der Acryl oder der Methacrylsäure sind.

7. Verwendung von Bindemitteln gemäß Anspruch 1, dadurch gekennzeichnet, daß in der wäßrigen Dispersion neben dem Copolymerisat P in Anteilen von 1 bis 10 Gew.-%, bezogen auf das Copolymerisat P, ein radikalisch vernetzendes Monomeres V) mit einem Siedepunkt > 150°C zusammen mit einem, im vernetzenden Monomeren V) löslichen Initiator mit einem Zerfallspunkt oberhalb 100° C in Mengen von 0,1 bis 5 Gew.-%, bezogen auf das Monomere V), enthalten ist.

8. Verwendung von Bindemitteln gemäß Anspruch 1, dadurch gekennzeichnet, daß der Gehalt der wäßrigen Dispersion am Copolymerisat P im Bereich von 10 bis 60 Gew.-% liegt.

9. Verwendung von Bindemitteln gemäß den Ansprüchen 1 bis 8, dadurch gekennzeichnet, daß das Copolymerisat P eine minimale Filmbildungstemperatur (MFT) (nach DIN 53787) von unter 100°C und eine dynamische Einfriertemperatur (nach DIN 53445/DIN 7724) von größer 140°C, vorzugsweise größer 150°C

besitzt.

10. Verfahren zur Herstellung von bindemittelhaltigen, gebrauchsfähigen Gießereiformsanden, dadurch gekennzeichnet, daß man technisch übliche Sande mit Bindemitteln gemäß den Ansprüchen 1 - 9 in Form der wäßrigen Dispersion in solchen Mengen zumischt, daß im gebrauchsfertigen Gießereiformsande mindestens 0,1 Gew.-% und höchstens 10 Gew.-% an Copolymerisat P enthalten sind.

11. Verfahren gemäß Anspruch 10, dadurch gekennzeichnet, daß man dem Sand das Bindemittel gemäß Anspruch 1 in solchen Mengen zumischt, daß im gebrauchsfertigen Gießereiformsand 1 ± 0,5 Gew.-% an Copolymerisat P enthalten sind.

12. Gebrauchsfähige, bindemittelhaltige Gießereiformsande, erhältlich nach dem Verfahren gemäß den Ansprüchen 10 und 11.

## Claims

1. Use of binders based on plastics containing carboxyl groups for preparing thermosetting moulding sand for foundry use, characterised in that the binders are an aqueous dispersion of a copolymer P synthesised from

A) at least one unsaturated carboxylic acid of formula I

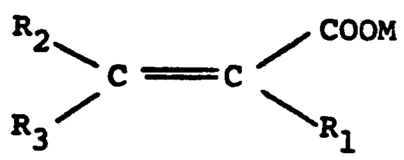

I

wherein $R_1$, $R_2$ and $R_3$ represent hydrogen, an alkyl group with 1 to 6 carbon atoms or a group $-(CH_2)_n-COOM$, whilst M represents a proton or an ammonium, alkali or alkaline earth metal cation and n represents zero or one, with the proviso that the unsaturated carboxylic acids of formula I have no more than two -COOM groups in the molecule, in amounts of at least 20 and at most 90% by weight, based on all the copolymer P, and

B) monomers which copolymerise with A) in amounts of from 10 to 80% by weight, based on P, with the proviso that the percentage of groups -COOM wherein M represents an ammonium, alkali or alkaline earth metal cation, should not exceed 20% of all the groups -COOM in the copolymer P,

as monomers.

2. Use of binders as claimed in claim 1, characterised in that the group of copolymerising monomers B) includes monomers which are capable of non-radical reactions of cross-linking at a temperature above 60° C.

3. Use of binders as claimed in claims 1 and 2, characterised in that the group of copolymerising monomers B) includes monomers containing a functional group which bring about cross-linking non-radically by reacting with another functional group or by reacting with a multifunctional, non-radical crosslinking reagent, at temperatures of above 60° C.

4. Use of binders as claimed in claim 3, characterised in that the functional groups which bring about cross-linking non-radically by reacting with other functional groups or by reacting with a multifunctional, non-radical cross-linking reagent at temperatures of above 60° C, are amido, N-methylolamido, hydroxy, epoxy or blocked isocyanate groups.

5. Use of binders as claimed in claims 2, 3 and 4, characterised in that the monomers which are capable of non-radical cross-linking reactions at a temperature above 60°C make up 0.3 to 30% by weight of the copolymer P.

6. Use of binders as claimed in claims 2 to 5, characterised in that the monomers capable of non-radical cross-linking reactions above 60° C are derivatives of acrylic or methacrylic acid.

7. Use of binders as claimed in claim 1, characterised in that the aqueous dispersion contains, in addition to the copolymer P in amounts of from 1 to 10% by weight, based on copolymer P, a radically crosslinking monomer V) with a boiling point > 150° C together with an initiator soluble in the crosslinking monomer V) having a point of decomposition above 100° C, in amounts of from 0.1 to 5% by weight, based on the monomer V).

8. Use of binders as claimed in claim 1, characterised in that the content of copolymer P in the aqueous dispersion is in the range from 10 to 60% by weight.

9. Use of binders as claimed in claims 1 to 8, characterised in that the copolymer P has a minimum film-forming temperature (MFT) (according to DIN 53787) of below 100° C and a dynamic freezing temperature (according to DIN 53445/DIN 7724) of above 140° C, preferably above 150° C.

10. Process for producing foundry moulding sand containing binders and ready for use, characterised in that conventional industrial sand is mixed with binders as claimed in claims 1 to 9 in the form of an aqueous dispersion in quantities such that the finished moulding sand contains at least 0.1% by weight and not more than 10% by weight of copolymer P.

11. Process as claimed in claim 10, characterised in that the binder as claimed in claim 1 is added to the sand in an amount such that the finished moulding sand contains 1 ± 0.5% by weight of copolymer P.

12. Foundry moulding sand containing binder and ready for use, obtained according to the process as claimed in claims 10 and 11.

**Revendications**

1. Utilisation de liants à base de matière synthetique contenant des groupes carboxyle pour la preparation de sables à mouier de fonderie thermodurcissables, caractérisée en ce que les liants se présentent sous la forme d'une dispersion aqueuse d'un copolymère P constitue, en tant que monomères, par

A) au moins un acide carboxylique insature de formule I

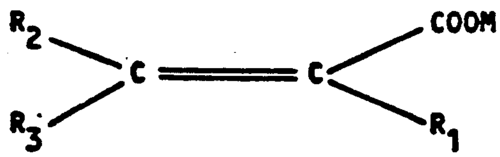

I

dans laquelle $R_1$, $R_2$, et $R_3$ sont mis chacun pour un atome d'hydrogène, un radical alkyle à 1 - 6 atomes de carbone ou un radical $-(CH_2)_n$-COOM, M étant un proton ou un cation ammonium, alcalin ou alcalinoterreux et n étant nul ou égal à 1, avec cette condition que les acides carboxyliques insaturés de formule I ne comportent pas plus de deux radicaux -COOM dans la molécule, dans des proportions d'au moins 20 % et de 90 % en poids au maximum par rapport à la totalité du copolymère P, et B) des monomères qui copolymérisent avec A), dans des proportions de 10 à 80 % en poids par rapport à P, avec cette condition que la part des radicaux -COOM dans lesquels M est un cation ammonium, alcalin ou alcalinoterreux dans la totalité des radicaux -COOM dans le copolymère P ne dépasse pas 20 %.

2. Utilisation de liants selon la revendication 1, caractérisée en ce que le groupe des monomères copolymérisables B) comprend des monomères qui sont susceptibles de réactions de réticulation non radicalaires à une température de plus de 60°C

3. Utilisation de liants selon la revendication 1 ou 2, caractérisée en ce que le groupe des monomères copolymérisables B) comprend des monomères contenant un groupement fonctionnel qui produisent une réticulation de façon non radicalaire a des températures de plus de 60°C, en réagissant avec d'autres groupements fonctionnels ou par réaction avec un reactif de réticulation non radicalaire multifonctionnel.

4. Utilisation de liants selon la revendication 3, caractérisée en ce que les groupements fonctionnels qui produisent une réticulation de façon non radicalaire à des températures de plus de 60°C, en réagissant avec d'autres groupements fonctionnels ou par réaction avec un réactif de reticulation non radicalaire multifonctionnel sont des groupements amido, N-méthylolamido, hydroxy, époxy, ou isocyanate bloqués.

5. Utilisation de liants selon l'une quelconque des revendications 2 à 4, caractérisée en ce que les monomères qui sont susceptibles de réactions de réticulation non radicalaires à une température de plus de 60°C entrent pour 0,3 à 30 % en poids dans la composition du copolymère P.

6. Utilisation de liants selon l'une quelconque des revendications 2 à 5, caractérisée en ce que les monomères susceptibles de réactions de réticulation non radicalaires au-dessus de 60°C sont des dérivés de l'acide acrylique ou de l'acide méthacrylique.

7. Utilisation de liants selon la revendication 1, caractérisée en ce qu'en dehors du copolymère p, il est contenu dans la dispersion aqueuse, dans des proportions de 1 à 10 % en poids par rapport au copolymère P, un monomère V) réticulant de façon radicalaire et ayant un point d'ébullition supérieur à 150°C, en même temps qu'un initiateur soluble dans le monomère réticulant V) et ayant un point de décomposition supérieur à 100°C, dans des proportions de 0,1 à 5 % en poids par rapport au monomère V).

8 Utilisation de liants selon la revendication 1, caractérisée en ce que la teneur de la dispersion aqueuse en copolymère P se situe dans la gamme de 10 à 60 % en poids.

9. Utilisation de liants selon l'une quelconque des revendications 1 à 8, caractérisée en ce que le copolymère P possède une température minimale de formation de films (MFT) (selon DIN 53787) de moins de 100°C et une température de solidification dynamique (selon DIN 53445/DIN 7724) de plus de 140°C, de préference de plus de 150°C.

14. Procédé pour la préparation de sables à mouler de fonderie contenant un liant prêts à l'emploi, caractérisé en ce qu'on mélange, à des sables utilises couramment dans la technique, des liants selon l'une quelconque des revendications 1 à 9, sous la forme de leur dispersion aqueuse, dans des quantités telles qu'il soit contenu, dans le sable à mouler de fonderie prêt à l'emploi, au moins 0,1 % en poids et au plus 10 % en poids de copolymère P.

11. Procédé selon la revendication 10, caractérisé en ce qu'on mélange au sable le liant selon la

revendication 1 dans des quantités telles qu'il soit contenu, dans le sable à mouler de fonderie prêt à l'emploi, 1 ± 0,5 % en poids de copolymère P.

12. Sables à mouler de fonderie contenant un liant prêts à l'emploi, obtenus par le procédé selon la revendication 10 ou 11.